# EUROPEAN PATENT SPECIFICATION

(11) **EP 4 093 088 B1**
(45) Date of publication and mention of the grant of the patent: **19.11.2025**
(21) Application number: 21752994.0
(22) Date of filing: 25.01.2021
(51) Int. Cl.: H04W 36/00

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 13.02.2020 CN 202010091524
(43) Date of publication of application: 23.11.2022
(73) Proprietor: Huawei Technologies Co., Ltd., Shenzhen, Guangdong 518129 (CN)
(72) Inventor: ZHAO, Li, Shenzhen, Guangdong 518129 (CN); YOU, Chunhua, Shenzhen, Guangdong 518129 (CN); LOU, Chong, Shenzhen, Guangdong 518129 (CN); HUANG, Qufang, Shenzhen, Guangdong 518129 (CN)
(74) Representative: Isarpatent
(86) International application number: PCT/CN2021/073662
(87) International publication number: WO 2021/159949

(56) References cited:
- EP-A2- 4 124 161
- WO-A1-2021/089040
- CN-A- 107 770 878
- CN-A- 110 519 794
- CN-A- 110 784 933
- SESSION CHAIR (INTERDIGITAL): "Report for NR-U, Power Savings, NTN and 2-step RACH", 23 November 2019 (2019-11-23), XP051828811, Retrieved from the Internet <URL:https://ftp.3gpp.org/tsg_ran/WG2_RL2/TSGR2_108/Docs/R2-1916284.zip R2-1916284_Session_Notes_NR-U_2-stepRA_PowSav_NTN_R2-108_final.docx> [retrieved on 20191123]
- HUAWEI ET AL: "UL LBT failure", vol. RAN WG2, no. Chongqing, China; 20191014 - 20191018, 3 October 2019 (2019-10-03), XP051791050, Retrieved from the Internet <URL:http://www.3gpp.org/ftp/tsg_ran/WG2_RL2/TSGR2_107bis/Docs/R2-1913029.zip> [retrieved on 20191003]
- CHARTER COMMUNICATIONS: "Remaining Issues on Consistent LBT Failure Detection in NRU", 3GPP DRAFT; R2-1916094, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20191118 - 20191122, 8 November 2019 (2019-11-08), Mobile Competence Centre ; 650, route des Lucioles ; F-06921 Sophia-Antipolis Cedex ; France, XP051817643
- OPPO: "LBT failure counter for uplink transmission in NR-U", 3GPP DRAFT; R2-1905615 - LBT FAILURE COUNTER FOR UPLINK TRANSMISSION IN NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 2 May 2019 (2019-05-02), Mobile Competence Centre ; 650, route des Lucioles ; F-06921 Sophia-Antipolis Cedex ; France, XP051709973
- OPPO: "Remaining issues of detecting uplink LBT failure in NR-U", 3GPP DRAFT; R2-1912095 - REMAINING ISSUES OF DETECTING UPLINK LBT FAILURE IN NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chongqing, China; 20191014 - 20191018, 3 October 2019 (2019-10-03), Mobile Competence Centre ; 650, route des Lucioles ; F-06921 Sophia-Antipolis Cedex ; France, XP051790148

## Description

### TECHNICAL FIELD

This application relates to the field of wireless communication technologies, and in particular, to a communication method and apparatus, a computer-readable storage medium and a computer program product.

### BACKGROUND

As mobile data service volumes continuously increase, spectrum resources become increasingly strained. Service transmission performed by using only a licensed spectrum resource cannot meet a service volume requirement. Therefore, service transmission performed on an unlicensed spectrum is considered in a long term evolution (Long Term Evolution, LTE) system, a new radio (new radio, NR) system, and the like. The unlicensed spectrum is a spectrum that can be shared by many different air interface technologies, for example, a wireless local area network that meets an Institute of Electrical and Electronics Engineers (Institute of Electrical and Electronics Engineers, IEEE) 802.11 protocol and LTE licensed spectrum assisted access (Licensed Assisted Access, LAA). Therefore, to avoid interference, before performing service transmission by using the unlicensed spectrum, a terminal side device may contend for a channel in the unlicensed spectrum by using a channel access procedure. If channel access succeeds, data transmission may be performed by using the unlicensed spectrum. If channel access fails, data transmission cannot be performed.

When the terminal side device experiences consistent uplink (consistent) listen before talk (listen before talk, LBT) failure in an active bandwidth part (bandwidth part, BWP) in a serving cell, the terminal side device may trigger reporting an LBT failure medium access control (medium access control, MAC) control element (control element, CE) to a network side device. The LBT failure MAC CE is used to indicate whether the consistent uplink LBT failure occurs in the serving cell.

The LBT failure MAC CE cannot be sent in the serving cell in which the consistent uplink LBT failure already occurs. Therefore, how to send the LBT failure MAC CE is an urgent problem to be resolved.

Document "Report for NR-U, Power Savings, NTN and 2-step RACH" from Session Chair (InterDigital), 3GPP DRAFT, R2-1916284, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX, FRANCE, 23 November 2019

Document "UL LBT failure" from Huawei et al., 3GPP DRAFT, R2-1913029 UL LBT FAILURE HANDLING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, no. Chongqing, China, 20191014 - 20191018, 3 October 2019 (2019-10-03), XP051791050, discloses UL LBT failure detection with BWP switching wherein the LBT failure counter and timer are reset upon BWP switching.

EP 4 124 161 A2 (a prior-right under Article 54(3) EPC) discloses methods and apparatuses for avoiding unintended UE state transition and reducing the risk of packet loss due to unintended UE state transition.

WO 2021/089040 A1(a prior-right under Article 54(3) EPC) discloses a method of listen before talk (LBT) recovery procedure for a user equipment (UE).

### SUMMARY

This application provides a communication method and apparatus, a computer-readable storage medium and a computer program product, as defined in the appended set of claims, to resolve a problem of how a terminal side device sends an LBT failure MAC CE.

In the method of this application, the terminal side device experiences the consistent uplink LBT failure in the BWP of the cell. If switching to the another BWP of the cell, the terminal side device cancels the consistent uplink LBT failure status of the cell, to avoid a case in which a network side device incorrectly understands the status of the cell when receiving an LBT failure MAC CE indicating that the consistent uplink LBT failure occurs in the cell.

### BRIEF DESCRIPTION OF DRAWINGS

FIG. 1 is a schematic diagram of a dual-connectivity architecture applicable to an embodiment of this application;
FIG. 2 is a schematic flowchart of a four-step random access procedure;
FIG. 3 is a schematic flowchart of a two-step random access procedure;
FIG. 4 is a schematic flowchart of a communication method according to an embodiment of this application;
FIG. 5 is a schematic diagram of a structure of a MAC CE according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic diagram of a time sequence according to an embodiment of this application;
FIG. 9 is a schematic diagram of another structure of a MAC CE according to an embodiment of this application;
FIG. 10 is a schematic diagram of a structure of a communication apparatus according to an embodiment of this application; and
FIG. 11 is a schematic diagram of a structure of a communication apparatus according to an embodiment of this application.

### DESCRIPTION OF EMBODIMENTS

The following describes embodiments of this application in detail with reference to the accompanying drawings of this specification.

Technical solutions in embodiments of this application may be applied to various communication systems, for example, a 5th generation mobile communication (the 5th Generation mobile communication technology, 5G) system (for example, new radio (New Radio, NR)) and a long term evolution (Long Term Evolution, LTE) system. The LTE system may include an LTE frequency division duplex (Frequency Division Duplex, FDD) system, an LTE time division duplex (Time Division Duplex, TDD) system, and the like. This is not limited herein.

In embodiments of this application, "a plurality of" means two or more. In view of this, in embodiments of this application, "a plurality of" may alternatively be understood as "at least two". "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of a description such as "at least one type" is similar. "And/or" describes an association relationship between associated objects and indicates that three relationships may exist. For example, A and/or B may indicate the following three cases: Only A exists, both A and B exist, and only B exists. In addition, the character "/" generally indicates an "or" relationship between the associated objects, unless otherwise specified.

A terminal side device in embodiments of this application may be a device having a wireless transceiver function or a chip that can be disposed in any device, or may be referred to as user equipment (user equipment, UE), an access terminal, a subscriber unit, a subscriber station, a mobile station, a remote station, a remote terminal, a mobile device, a user terminal, a wireless communication device, a user agent, or a user apparatus. The terminal side device in embodiments of this application may be a mobile phone (mobile phone), a tablet (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

A network side device may be an evolved NodeB (evolved NodeB, eNB) in the LTE system, a next generation NodeB (next Generation NodeB, gNB) in the NR system, or the like.

Embodiments of this application may be applied to a network side device and a terminal side device that support a single-base station carrier aggregation (carrier aggregation, CA) technology, and a network side device and a terminal side device that support a cross-base station carrier aggregation technology such as a dual-connectivity (Dual-Connectivity, DC) technology. The network side device and the terminal side device may aggregate at least two component carriers (Component Carriers, CCs) together to support a wider transmission bandwidth. One of the CCs may correspond to one independent cell. The single-base station carrier aggregation technology is usually referred to as a carrier aggregation technology for short. Unless otherwise specified, the carrier aggregation technology below is the single-base station carrier aggregation technology.

It should be noted that the carrier aggregation technology and the dual-connectivity technology have at least the following differences:
1. In dual connectivity, data flows are separated and combined at a packet data convergence protocol (packet data convergence protocol, PDCP) layer. The data flows are simultaneously transmitted to a user through a plurality of base stations. In carrier aggregation, data flows are separated and combined at a medium access control (medium access control, MAC) layer.
2. The dual connectivity is aggregation between different stations, which are usually a macro base station and a micro base station. The macro base station and the micro base station are connected to each other through an X2 interface. The carrier aggregation is aggregation of different CCs in a same station.

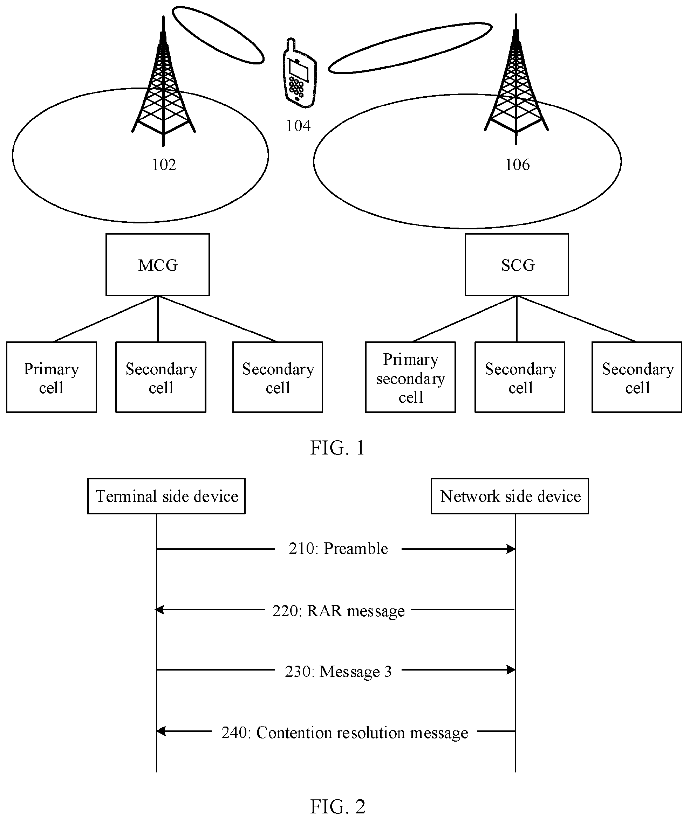

In a dual-connectivity scenario, a master cell group (master cell group, MCG) may be included. A cell group other than the MCG may be referred to as a secondary cell group (secondary cell group, SCG). For details, refer to FIG. 1. In FIG. 1, a terminal side device 104 separately establishes connections to a network side device 102 and a network side device 106. For the terminal side device 104, a cell group in the network side device 102 may be an MCG, and a cell group in the network side device 106 may be an SCG.

There may be many cells in the MCG. One of the cells is used to initiate initial access. The cell is referred to as a primary cell (primary cell, PCell). Another cell is referred to as a secondary cell (secondary cell, SCell). The PCell in the MCG and the SCell in the MCG are aggregated by using a carrier aggregation technology. Correspondingly, there is also a most primary cell in the SCG, and the cell may be referred to as a primary secondary cell (primary secondary cell, PSCell). Another cell in the SCG is referred to as a secondary cell. The PSCell in the SCG and the SCell in the SCG are also aggregated by using the CA technology. For ease of description, a term "special cell (special cell, sPCell)" is defined in a current protocol. For the dual-connectivity scenario, the term "special cell" is the PCell in the MCG or the PSCell in the SCG. Otherwise, the term "special cell" is the PCell.

When a terminal side device accesses a cell, in addition to an initial BWP, a network side device may configure a dedicated BWP for the terminal side device, and may configure a maximum of four dedicated BWPs. The network side device may activate one of the BWPs. One terminal side device has only one active BWP in one cell at the same time. The terminal side device may transmit data in the active BWP.

In this embodiment of this application, the network side device configures one or more BWPs for the terminal side device in an unlicensed-spectrum cell, and activates one BWP in the configured BWPs. The terminal side device may communicate with the network side device by using an unlicensed spectrum. Before the terminal side device communicates with the network side device by using the unlicensed spectrum, the terminal side device performs uplink LBT to contend for a channel.

There are two types of the LBT. Type 1: LBT based on fixed duration. If energy of a signal detected by the terminal side device in a channel within the fixed duration is less than a preset threshold, it is considered that the channel is idle. In this case, the terminal side device may occupy the channel. Otherwise, the terminal side device needs to contend for a channel again.

Correspondingly, for the type-1 LBT, if the energy of the signal detected by the terminal side device in the channel within the fixed duration is greater than the preset threshold, it is considered that the channel is busy. In this case, the terminal side device may determine that the LBT fails. The terminal side device can occupy a channel for data transmission only when determining that the channel is idle.

Type 2: Energy detection based on a backoff mechanism. The terminal side device randomly selects a value A, where A is an integer greater than 0. Before a start point of data transmission, the terminal side device considers that a channel is idle only after detecting at least A idle slots for energy detection. Otherwise, the terminal side device considers that the channel is busy. The start point of data transmission may be a start moment of data transmission of to-be-transmitted data of the terminal side device.

Correspondingly, for the type-2 LBT, if the terminal side device has not detected the at least A idle slots for energy detection before the start point of data transmission, the terminal side device may determine that the LBT fails. For example, data is transmitted in one slot (slot). The slot includes 14 symbols (which are symbols 0 to 13). Assuming that the terminal side device starts to transmit the data from the symbol 0, if the terminal side device has not detected the at least A idle slots for energy detection at a start moment of the symbol 0, the terminal side device may determine that the LBT fails.

When the terminal side device performs uplink LBT in the active BWP, the terminal side device determines that each time an uplink LBT failure occurs in the BWP, the terminal side device may perform the following operations: 1. Increase a count value of an LBT failure counter (LBT_FAIL_COUNTER) by 1, where an initial value of the counter is 0. 2. Start or restart a timer (the timer may be lbtFailureDetectionTimer defined in 3GPP specifications), where timing duration of the timer may be duration configured by the network side device.

Before the timer expires, if the count value of the LBT failure counter reaches a threshold, the terminal side device may determine that consistent uplink LBT failure (consistent LBT failure) occur in the active BWP. When the timer expires, the terminal side device may reset the count value of the counter to 0.

In this embodiment of this application, when determining that the consistent uplink LBT failure occurs in a serving cell, the terminal side device may send an LBT failure MAC CE to the network side device. Therefore, this embodiment of this application provides a method for sending an LBT failure MAC CE. The following provides detailed descriptions.

The method provided in this embodiment of this application relates to a two-step random access procedure and a four-step random access procedure, which are separately described below.

It should be noted that the four-step random access procedure includes a contention-based four-step random access procedure and a non-contention-based four-step random access procedure. This embodiment of this application relates to the contention-based four-step random access procedure. Unless otherwise specified, the "four-step random access procedure" described in this embodiment of this application is the contention-based four-step random access procedure.

As shown in FIG. 2, the contention-based four-step random access procedure includes the following steps.

Step 210: A terminal side device sends a preamble (preamble) to a network side device.

The preamble is also referred to as a message 1 (msg 1) of the random access procedure.

If the network side device successfully detects the preamble sent by the terminal side device, the network side device sends a random access response (random access response, RAR) message corresponding to the preamble.

Step 220: The network side device sends the RAR message to the terminal side device.

The RAR message may also be referred to as a message 2 (msg 2). The RAR message includes an uplink timing advance, an uplink grant (UL grant) allocated for transmission of a message 3 (msg 3), a temporary cell radio network temporary identifier (cell radio network temporary identifier, temporary C-RNTI) allocated by the network side device, and the like.

A physical downlink control channel (physical downlink control channel, PDCCH) that schedules the RAR message is scrambled by using a random access radio network temporary identifier (random access radio network temporary identifier, RA-RNTI). After sending the preamble, the terminal side device may monitor a corresponding PDCCH within an RAR response window based on an RA-RNTI value corresponding to the preamble. If a preamble corresponding to a preamble index carried in the RAR message that is obtained by the terminal side device by using the monitored PDCCH is consistent with the preamble sent by the message 1, the terminal side device stops monitoring the RAR message.

Correspondingly, if the terminal side device does not receive the RAR message within an RAR time window, or no preamble corresponding to the preamble index in the received RAR message matches the preamble sent by the terminal side device, the terminal side device considers that the random access procedure fails.

Step 230: The terminal side device sends the network side device a scheduling-based transmitted (scheduled transmission) message, namely, the message 3.

The terminal side device sends the message 3 to the network side device through a physical uplink shared channel (physical uplink shared channel, PUSCH) based on information about the uplink grant and the uplink timing advance in the message 2.

Step 240: The terminal side device receives a contention resolution message, namely, a message 4, sent by the network side device.

Contention occurs when a plurality of terminal side devices use a same preamble to initiate random access. A maximum of one terminal side device in terminal side devices contending for a same resource can succeed in accessing. In this case, the network side device sends the contention resolution message to the terminal side device through a PDSCH.

Specifically, after sending the message 3, the terminal side device starts a contention resolution timer (mac-Contention Resolution Timer), and monitors the PDCCH by using the temporary C-RNTI indicated in the RAR message or a C-RNTI preconfigured by the network side device. If the terminal side device receives, before the contention resolution timer expires, the contention resolution message sent by the network side device to the terminal side device, the terminal side device considers that the random access procedure succeeds. Otherwise, the terminal side device determines that the random access procedure fails.

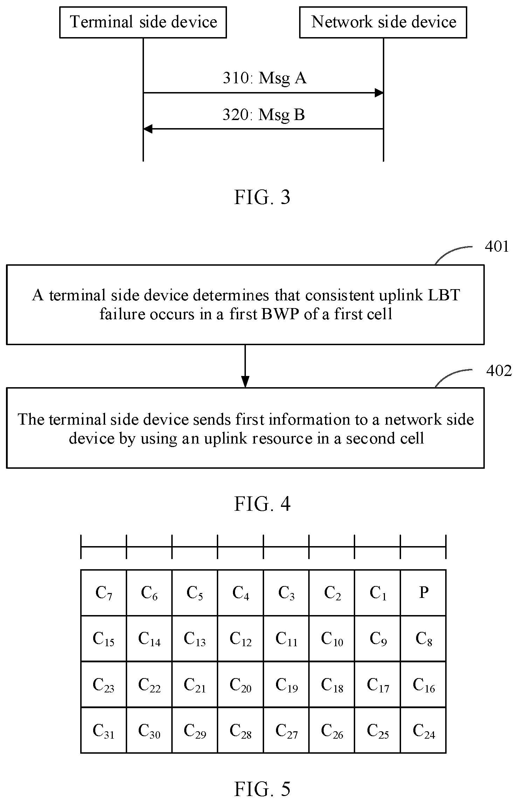

As shown in FIG. 3, the two-step random access procedure includes the following steps.

Step 310: A terminal side device sends a message A (message A, msg A) to a network side device.

Specifically, the msg A includes a random access signal and payload data. The payload data is carried by using a PUSCH resource. The PUSCH resource is a physical uplink shared channel (physical uplink shared channel, PUSCH) resource that is determined based on a preamble (preamble) and a physical random access channel (physical random access channel, PRACH) occasion (occasion) corresponding to the preamble.

The random access signal may include at least one of the preamble and a demodulation reference signal (demodulation reference signal, DMRS). The random access signal is used by the network side device to receive the payload data. For example, based on the random access signal, a transmission boundary of the payload data (for example, a start position and an end position of a slot (slot) for transmitting the payload data) may be determined, the payload data may be demodulated, and the like. The payload data may be at least one of control plane data and user plane data. The payload data may include but is not limited to any one or more of an RRC connection request, an identifier of the terminal side device, a scheduling request, a buffer status report (buffer status report, BSR), and service data.

Optionally, the identifier of the terminal side device may be a C-RNTI, a temporary mobile subscriber identity (serving-temporary mobile subscriber identity, s-TMSI), an identifier (resumeIdentity) of the terminal side device in an inactive state, or the like. A specific identifier to be carried depends on different random access trigger events. This is not limited in this embodiment of this application. It should be noted that the identifier of the terminal side device may be all carried in the payload data, or may be partially carried in the payload data, and partially carried in the random access signal.

Step 320: The network side device sends a message B (message B, msg B) to the terminal side device.

Specifically, the msg B is used to carry a response message for the random access signal and the payload data in the msg A. The response message may include at least one of the following: a temporary C-RNTI, a timing advance command (timing advance command), an uplink grant, a contention resolution identity (contention resolution identity), and the like. The contention resolution identity may be some or all of content of the payload data.

A network architecture and a service scenario that are described in embodiments of this application are intended to describe the technical solutions in embodiments of this application more clearly, but constitute no limitation on the technical solutions provided in embodiments of this application. A person of ordinary skill in the art may know that, with evolution of the network architecture and emergence of new service scenarios, the technical solutions provided in embodiments of this application are also applicable to similar technical problems.

Embodiments of this application mainly provide the following solutions:
1. When consistent uplink LBT failure occurs in a first cell (for example, the first cell is a SpCell), a terminal side device may send an LBT failure MAE CE. The LBT failure MAC CE is used to indicate that the consistent uplink LBT failure occurs in the first cell. During initiation of a random access procedure, the terminal side device may send the LBT failure MAC CE in a BWP to which the terminal side device switches.
2. After sending an LBT failure MAC CE, a terminal side device may recover an uplink LBT failure in a first cell without BWP switching.
   When consistent uplink LBT failure occurs in the first cell (for example, the first cell is a SpCell), the terminal side device may send the LBT failure MAE CE. The LBT failure MAC CE is used to indicate that the consistent uplink LBT failure occurs in the first cell. The terminal side device may send the LBT failure MAC CE by using a CG/DG grant of a second cell (for example, the second cell may be an SCell). The second cell is a cell in which no consistent uplink LBT failure occurs.
   It should be noted that, after sending the LBT failure MAC CE, the terminal side device may not perform BWP switching before receiving DCI that is of a network side device and that indicates to perform BWP switching.
3. After sending an LBT failure MAC CE, a terminal side device may start a timer. Before the timer expires, the terminal side device waits for DCI from a network side device, but does not perform BWP switching. The DCI indicates the terminal side device to perform BWP switching. When the timer expires, if the terminal side device does not receive the DCI that indicates the terminal side device to perform BWP switching, the terminal side device may perform BWP switching, and initiate a random access procedure.
   In this case, if the terminal side device initiates a four-step random access procedure, the LBT failure MAC CE may be carried in a msg 3. If the terminal side device initiates a two-step random access procedure, the LBT failure MAC CE may be carried in a msg A.
4. When a terminal side device experiences consistent uplink LBT failure in a first cell (for example, the first cell is a SpCell), performs BWP switching, and initiates a random access procedure in a switched-to BWP, and in the random access procedure, if a second cell (for example, the second cell may be an SCell) in which no consistent uplink LBT failure occurs has an available uplink resource, and a start moment of the available uplink resource in the second cell is earlier than a sending moment of payload data of a msg A in a two-step random access procedure, or earlier than a start moment of an uplink resource indicated by an RAR message in a four-step random access procedure, the terminal side device may send an LBT failure MAC CE in the first cell. In this case, the terminal side device does not send the LBT failure MAC CE in the random access procedure. However, because BWP switching has been started, the terminal side device can notify a network side device of the switched-to BWP only after completing the BWP switching.
5. When experiencing consistent uplink LBT failure in a third cell (for example, the third cell is an SCell), before generating an LBT failure MAC CE used to indicate that the consistent uplink LBT failure occurs, a terminal side device cancels a consistent uplink LBT failure status of the third cell if the terminal side device receives DCI that indicates the terminal side device to perform BWP switching.

With reference to the foregoing descriptions, FIG. 4 is a schematic flowchart of a communication method according to an embodiment of this application. In the method procedure shown in FIG. 4, both a first cell and a second cell may serve a terminal side device. When the method procedure shown in FIG. 4 is applied to a scenario in which a network side device performs communication by using a carrier aggregation technology, the first cell may be a primary cell, and the second cell may be a secondary cell. When the method procedure shown in FIG. 4 is applied to a scenario in which the network side device performs communication by using a dual-connectivity technology, the first cell may be a primary cell, and the second cell may be a secondary cell that is in a same master cell group as the first cell. Alternatively, the first cell may be a primary secondary cell, and the second cell may be a secondary cell that is in a same secondary cell group as the first cell. Refer to FIG. 4. The method includes the following steps.

Step 401: The terminal side device determines that consistent uplink LBT failure occurs in a first BWP of the first cell.

It should be noted that the first BWP is a BWP activated by the network side device for the terminal side device in the first cell. How the terminal side device specifically experiences the consistent uplink LBT failure is not limited in this embodiment of this application. For example, refer to the foregoing descriptions. Details are not described herein again.

Step 402: The terminal side device sends first information to the network side device by using an uplink resource in the second cell.

The first information is used to indicate that the terminal side device experiences the consistent uplink LBT failure in the first cell.

Further, the second cell is a cell in which no consistent uplink LBT failure occurs. It should be noted that, that the second cell is a cell in which no consistent uplink LBT failure occurs may mean that when sending the first information, the terminal side device determines that no consistent uplink LBT failure occurs in the second cell, or may mean that when determining the uplink resource used to send the first information, the terminal side device determines that no consistent uplink LBT failure occurs in the second cell.

It should be noted that, in this embodiment of this application, the uplink resource in the second cell is an uplink resource used by the terminal side device for new transmission. For example, the uplink resource in the second cell may include but is not limited to one or more of the following:
a configured grant (configured grant) resource; and
a resource scheduled by a physical downlink control channel (physical downlink control channel, PDCCH) scrambled by using a cell radio network temporary identifier (cell radio network temporary identity, C-RNTI) of the terminal side device.

The terminal side device can send uplink data on configured grant uplink resources without dynamic scheduling, by the network side device, the configured grant resources that can be used for uplink transmission. The resources include but are not limited to uplink resources of a configured grant type 1 (configured grant type 1) and a configured grant type 2 (configured grant type 2) in a new radio-unlicensed (new radio-unlicensed, NR-U) system.

A first configuration manner is the configured grant type 1: The network side device may preconfigure, in a semi-static resource allocation manner, a resource required by the terminal side device for uplink transmission, that is, the configured grant resource, which may also be referred to as a preconfigured uplink grant (configured UpLink grant). The resource is referred to as the configured grant resource below. It should be understood that the configured grant resource may appear periodically, and the terminal side device does not need to first obtain an uplink grant each time before sending the uplink transmission. For example, the network side device may configure the configured grant resource for uplink transmission by using radio resource control (radio resource control, RRC) signaling. The RRC signaling may further include a periodicity of the configured grant resource, so that the terminal side device can transmit data on the configured grant resource.

A second configuration manner is the configured grant type 2: The network side device may indicate some information of the configured grant resource by using RRC signaling, for example, a periodicity of the configured grant resource. In addition, the network side device may further indicate the configured grant resource by using physical layer signaling. The physical layer signaling is further used to activate the configured grant resource, so that the terminal side device can transmit data on the configured grant resource.

It should be noted that naming of the first configuration manner is not limited to the configured grant type 1. The first configuration manner may also have another name. This is not limited in this embodiment of this application. Similarly, naming of the second configuration manner is not limited to the configured grant type 2. The second configuration manner may have another name. A communication system to which the first configuration manner and the second configuration manner are applicable is not limited in this embodiment of this application. The communication system may be an LTE communication system, a 5G communication system, or another communication system.

In this embodiment of this application, a specific implementation of the first information is not limited. In a possible implementation, the first information is a MAC CE, for example, an LBT failure MAC CE. For example, FIG. 5 is a schematic diagram of a structure of a MAC CE according to an embodiment of this application. The MAC CE shown in FIG. 5 includes a plurality of cell identifier fields. For example, FIG. 5 includes 31 cell identifier fields: C1 to C31. When a value of a bit corresponding to one cell identifier field is a first value, it indicates that the terminal side device experiences the consistent uplink LBT failure in a cell corresponding to the cell identifier field. When a value of a bit corresponding to one cell identifier field is a second value, it indicates that the terminal side device does not experience the consistent uplink LBT failure in a cell corresponding to the cell identifier field. Specific values of the first value and the second value are not limited. For example, the first value is 1, and the second value is 0.

The MAC CE shown in FIG. 5 may further include a primary cell field, which is represented by P in FIG. 5. During actual application, the primary cell field may be represented in another manner. This is not limited in this embodiment of this application. The primary cell field is used to indicate whether the terminal side device experiences the consistent uplink LBT failure in a primary cell. Similarly, when a value of a bit corresponding to the primary cell field is a first value, it indicates that the terminal side device experiences the consistent uplink LBT failure in the primary cell. When a value of a bit corresponding to the primary cell field is a second value, it indicates that the terminal side device does not experience the consistent uplink LBT failure in the primary cell. Specific values of the first value and the second value are not limited. For example, the first value is 1, and the second value is 0.

The MAC CE shown in FIG. 5 may further include another field, for example, a reserved (reserved, R) field. Examples are not described one by one herein.

With reference to the foregoing descriptions, when the first information is an LBT failure MAC CE, and when the terminal side device performs logical channel priority prioritization based on the uplink resource of the second cell, where an obtained prioritization result indicates that the uplink resource in the second cell may include the LBT failure MAC CE and a subheader of the LBT failure MAC CE, the terminal side device may send the first information on the uplink resource of the second cell.

In this embodiment of this application, the terminal side device may further perform BWP switching. BWP switching means that an active BWP is switched (switch) from a current BWP to another BWP. After performing BWP switching, the terminal side device stops using a switched-from BWP and starts to use a switched-to BWP. Details are separately described below.

### Implementation 1:

Step 1: A terminal side device determines that consistent uplink LBT failure occurs in a first BWP of a first cell.

Step 2: The terminal side device sends first information by using an uplink resource in a second cell, and may start a first timer.

Timing duration of the first timer is first duration. The first duration may be configured by a network side device, or may be independently determined by the terminal side device, or may be duration specified in a communication protocol, or may be determined in another manner. This is not limited in this embodiment of this application.

In this embodiment of this application, timing starts when the first timer is started. When the timing duration of the first timer is the first duration, the timing of the first timer ends. In this case, it may be considered that the first timer expires.

Step 3: After the first timer is started, the terminal side device may perform BWP switching in any one of the following cases.

Case 1: After the first timer is started, if receiving second information from the network side device during running of the first timer, the terminal side device may switch to a third BWP indicated by the second information, and stop the first timer. The second information is downlink control information (downlink control information, DCI) used to schedule the terminal side device to perform BWP switching. The second information is used to indicate that the terminal side device switches to the third BWP.

Case 2: When the first timer expires, to be specific, the terminal side device does not receive, from the network side device within the first duration from the start of the first timer to the expiration of the first timer, second information in response to the first information, the terminal side device may actively perform BWP switching, for example, switch to a second BWP of the first cell.

It should be noted that, during running of the first timer, the terminal side device does not actively perform BWP switching in the first cell, but performs BWP switching only when receiving the second information from the network side device.

It should be noted that the second BWP and the third BWP may be a same BWP, or may be different BWPs. This is not limited in this embodiment of this application.

Step 4: The terminal side device completes BWP switching, to recover the consistent uplink LBT failure.

An example in which the terminal side device switches to the second BWP is used below for descriptions.

In this embodiment of this application, the second BWP may include at least one of a resource for performing a random access procedure and a scheduling request (scheduling request, SR) resource. The resource for performing the random access procedure may include at least one of a resource for performing a two-step random access procedure and a resource for performing a four-step random access procedure. The resource for performing the two-step random access procedure includes a PRACH resource for sending a preamble (preamble) and a PUSCH resource that is determined based on the preamble and a PRACH occasion corresponding to the preamble.

The terminal side device may recover the consistent uplink LBT failure by performing the random access procedure or an SR procedure in the second BWP.

In a first possible implementation, the terminal side device may perform, in the second BWP, the random access procedure by using the resource for performing the random access procedure included in the second BWP.

It should be noted that the random access procedure performed by the terminal side device in the second BWP may be a two-step random access procedure, or may be a four-step random access procedure. For example, when the second BWP includes only the resource for performing the two-step random access procedure, the terminal side device may perform the two-step random access procedure in the second BWP. When the second BWP includes only the resource for performing the four-step random access procedure, the terminal side device may perform the four-step random access procedure in the second BWP. When the second BWP includes the resource of the two-step random access procedure and the resource of the four-step random access procedure, the terminal side device determines, based on a reference signal received power (Reference Signal Received Power, RSRP), whether the two-step random access procedure or the four-step random access procedure is initiated. When determining that the reference signal received power is greater than a threshold, the terminal side device initiates the two-step random access procedure. When determining that the reference signal received power is less than or equal to the threshold, the terminal side device initiates the four-step random access procedure. By way of example but not limitation, the reference signal may be a downlink path loss reference signal.

Further, the terminal side device may send the first information to the network side device in the random access procedure.

Case 1: When the random access procedure performed by the terminal side device in the second BWP is the two-step random access procedure, the terminal side device may send the first information by using the PUSCH resource that is determined based on the preamble and the PRACH occasion corresponding to the preamble in the two-step random access procedure.

Specifically, the PUSCH resource that is determined based on the preamble and the PRACH occasion corresponding to the preamble may be used to send payload data of a message A in the two-step random access procedure. Therefore, the terminal side device may send the first information by using the message A in the two-step random access procedure. Refer to the two-step random access procedure shown in FIG. 3.

Case 2: When the random access procedure performed by the terminal side device in the second BWP is the four-step random access procedure, the terminal side device may send the first information by using an uplink resource allocated by using a random access response (random access response, RAR) message in the four-step random access procedure.

It should be noted that in the four-step random access procedure, the RAR message may also be referred to as a message 2. The RAR message may include information such as an uplink timing advance and an uplink grant (UpLink grant) that is allocated for a message 3 (msg 3). The uplink grant in the RAR message is used to allocate an uplink resource for the message 3. The terminal side device may send the message 3 by using the uplink resource allocated by using the uplink grant in the RAR message. Therefore, the terminal side device may send the first information by using the message 3 in the four-step random access procedure.

In a second possible implementation, the second BWP to which the terminal side device switches may include the scheduling request (scheduling request, SR) resource. The terminal side device may perform, in the second BWP, a resource scheduling request procedure by using the scheduling request resource included in the second BWP.

Further, in the resource scheduling request procedure, the terminal side device may send an SR to request an uplink resource, and send the first information by using the uplink resource requested by using the SR.

It should be noted that, when the terminal side device resends, by using the msg 3 in the four-step random access procedure, the msg A in the two-step random access procedure, or the uplink resource requested by using the SR, the first information that is sent through the second cell, in a possible implementation, the terminal side device stores a status of a serving cell included in the first information sent through the second cell, and regenerates first information.

### Implementation 2

Step 1: A terminal side device determines that consistent uplink LBT failure occurs in a first BWP of a first cell.

Step 2: The terminal side device may send first information for a plurality of times by using an uplink resource in a second cell.

Each time before sending the first information in the second cell, the terminal side device may determine a quantity of times of sending the first information. For example, the terminal side device may maintain a counter. Each time the first information is sent in the second cell, a count value of the counter is increased by 1. Each time before sending the first information in the second cell, the terminal side device first determines whether the value of the counter reaches N.

If the terminal side device determines that the quantity of times of sending the first information is less than N, the terminal side device determines to send the first information by using the uplink resource in the second cell.

When the terminal side device determines that the quantity of times of sending the first information is not less than N, the terminal side device determines not to send the first information by using the uplink resource in the second cell. The terminal side device may actively perform BWP switching, for example, switch to a second BWP of the first cell.

N is a maximum quantity of times that the terminal side device sends the first information by using the uplink resource in the second cell, and may be set by a network side device by using RRC signaling, may be independently determined by the terminal side device, may be agreed upon in a communication protocol, or may be determined in another manner. This is not limited in this embodiment of this application.

Step 3: The terminal side device may perform BWP switching in any one of the following cases.

It should be noted that a sequence of step 2 and step 3 is not limited. If the terminal side device receives second information before step 2, BWP switching may be performed first.

Case 1: When the quantity of times of sending the first information is not less than N, the terminal side device may actively switch to the second BWP of the first cell.

Case 2: When the quantity of times of sending the first information is less than N, if the terminal side device receives the second information from the network side device, the terminal side device may switch to a third BWP indicated by the second information. The second information is used to indicate the third BWP to which the terminal side device switches.

In this case, the terminal side device may further reset the quantity of times of sending the first information to 0.

It should be noted that when the terminal side device determines that the quantity of times of sending the first information is less than N, and does not receive the second information of the network side device, the terminal side device may not actively perform BWP switching. When receiving the second information of the network side device, the terminal side device may switch, based on the second information, to the third BWP indicated by the second information.

Step 4: The terminal side device completes BWP switching, to recover the consistent uplink LBT failure.

An example in which the terminal side device switches to the second BWP is used below for descriptions. The second BWP may include at least one of a resource for performing a random access procedure and an SR resource. For details, refer to the foregoing descriptions. Details are not described herein again.

When switching to the second BWP, the terminal side device may recover the consistent uplink LBT failure by using a random access procedure or an SR procedure.

Further, the terminal side device may send the first information to the network side device in the random access procedure or a resource scheduling request procedure.

When the random access procedure is a two-step random access procedure, the terminal side device may send the first information by using a PUSCH resource that is determined based on a preamble and a PRACH occasion corresponding to the preamble in the two-step random access procedure. For details, refer to the foregoing descriptions. Details are not described herein again.

When the random access procedure is a four-step random access procedure, the terminal side device may send the first information by using an uplink resource allocated by using an RAR message in the four-step random access procedure. For details, refer to the foregoing descriptions. Details are not described herein again.

When the terminal side device performs the SR procedure, the terminal side device may send the first information by using an uplink resource requested by using the SR. For details, refer to the foregoing descriptions. Details are not described herein again.

### Implementation 3:

Step 1: A terminal side device determines that consistent uplink LBT failure occurs in a first BWP of a first cell.

Step 2: The terminal side device actively performs BWP switching in the first cell to switch to a second BWP of the first cell.

The second BWP may include at least one of a resource for performing a random access procedure and an SR resource. For details, refer to the foregoing descriptions. Details are not described herein again.

Step 3: The terminal side device may recover, in the second BWP, the consistent uplink LBT failure by using a two-step random access procedure, a four-step random access procedure, or an SR procedure.

Step 4: The terminal side device sends first information on the uplink resource in the second cell when determining that a start moment of an uplink resource in a second cell is earlier than a sending moment of payload data of a msg A in the two-step random access procedure, is earlier than a start moment of an uplink resource indicated by an RAR message in the four-step random access procedure, or is earlier than a sending moment of an uplink resource requested by using an SR.

Specifically, in a first scenario, the payload data of the msg A in the two-step random access procedure is sent by using a PUSCH resource that is determined based on a preamble and a PRACH occasion corresponding to the preamble in the two-step random access procedure. If the terminal side device initiates the two-step random access procedure in the second BWP by using the resource for performing the random access procedure in the second BWP, the terminal side device sends the first information by using the uplink resource in the second cell when a start moment of the uplink resource in the second cell in time domain is earlier than a start moment of the PUSCH resource that is determined based on the preamble and the PRACH occasion corresponding to the preamble in the two-step random access procedure.

In a second scenario, if the terminal side device initiates the four-step random access procedure in the second BWP by using the resource for performing the random access procedure in the second BWP, the terminal side device sends the first information by using the uplink resource in the second cell when a start moment of the uplink resource in the second cell in time domain is earlier than a start moment of the uplink resource allocated by using the RAR message in the four-step random access procedure.

In a third scenario, if the terminal side device initiates the SR procedure in the second BWP by using the SR resource in the second BWP, the terminal side device sends the first information by using the uplink resource in the second cell when a start moment of the uplink resource in the second cell in time domain is earlier than a start moment of the uplink resource requested by using the SR procedure.

It should be noted that the terminal side device may not send the first information on the uplink resource in the second cell when determining that the start moment of the uplink resource in the second cell is later than the sending moment of the payload data of the msg A in the two-step random access procedure, is later than the start moment of the uplink resource indicated by the RAR message in the four-step random access procedure, or is later than the sending moment of the uplink resource requested by using the SR.

Further, the terminal side device may recover the consistent uplink LBT failure in the second BWP by using the random access procedure or the SR procedure. It is assumed that any one of the foregoing three scenarios is met. After the terminal side device sends the first information on the uplink resource in the second cell, if the terminal side device is performing the two-step random access procedure or the four-step random access procedure in the second BWP of the first cell, the terminal side device may further perform any one of the following operations:
1. Continue to complete the two-step random access procedure or the four-step random access procedure initiated in the second BWP.
2. Terminate the ongoing two-step random access procedure or four-step random access procedure, and switch back to the first BWP.

Further, when recovering the uplink LBT failure by using the random access procedure or the SR procedure, the terminal side device may send the first information by using the random access procedure or the SR procedure.

For example, when the random access procedure is the two-step random access procedure, the terminal side device may send the first information by using the PUSCH resource that is determined based on the preamble and the PRACH occasion corresponding to the preamble in the two-step random access procedure. For details, refer to the foregoing descriptions. Details are not described herein again.

When the random access procedure is the four-step random access procedure, the terminal side device may send the first information by using the uplink resource allocated by using the RAR message in the four-step random access procedure. For details, refer to the foregoing descriptions. Details are not described herein again.

When the terminal side device initiates the SR procedure, the terminal side device may send the first information by using the uplink resource requested by using the SR. For details, refer to the foregoing descriptions. Details are not described herein again.

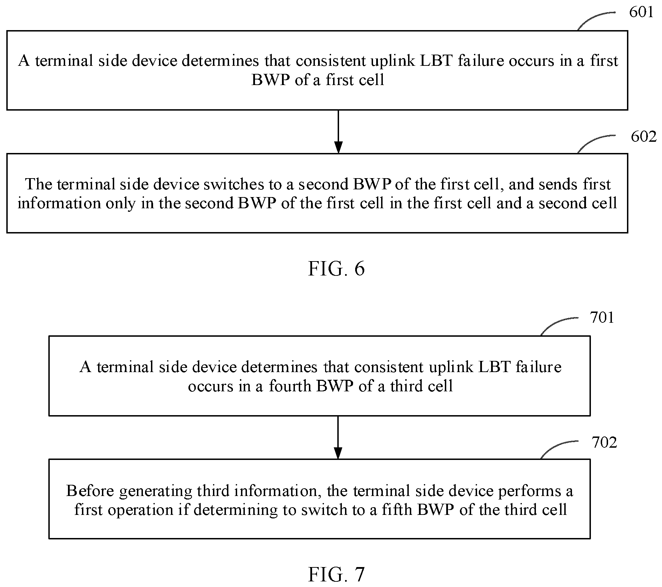

An embodiment of this application further provides a method. When determining that consistent uplink LBT failure occurs in a first BWP of a first cell, a terminal side device may send first information only through the first cell. For details, refer to a procedure shown in FIG. 6.

In the method procedure shown in FIG. 6, both the first cell and a second cell may serve the terminal side device. The first cell is a primary cell or a primary secondary cell, and the second cell is a secondary cell. For details, refer to FIG. 6. The method includes the following steps.

Step 601: The terminal side device determines that the consistent uplink LBT failure occurs in the first BWP of the first cell.

Step 602: The terminal side device switches to a second BWP of the first cell, and sends the first information only in the second BWP of the first cell in the first cell and the second cell.

The first information is used to indicate that the terminal side device experiences the consistent uplink LBT failure in the first cell.

The second cell is a cell in which no consistent uplink LBT failure occurs. It should be noted that, that the second cell is a cell in which no consistent uplink LBT failure occurs may mean that when sending the first information, the terminal side device does not experience the consistent uplink LBT failure in the second cell, or may mean that when determining an uplink resource used to send the first information, the terminal side device does not experience the consistent uplink LBT failure in the second cell.

In the procedure shown in FIG. 6, the second BWP may include at least one of a resource for performing a random access procedure and an SR resource. The second BWP may include the resource for performing the random access procedure. The resource for performing the random access procedure may include at least one of a resource for performing a two-step random access procedure and a resource for performing a four-step random access procedure. The terminal side device may perform the random access procedure in the second BWP by using the resource for performing the random access procedure included in the second BWP, and send the first information by using the random access procedure. For details, refer to descriptions in the procedure shown in FIG.

### 4. Details are not described herein again.

The second BWP may further include the SR resource. The terminal side device may initiate an SR procedure by using the SR resource in the second BWP, to send the first information by using an uplink resource requested by using the SR procedure. A detailed procedure is not described again.

Further, before sending the first information in the second BWP of the first cell, the terminal side device may determine whether there is an available uplink resource in the second cell.

The available uplink resource in the second cell may be an uplink resource used for new transmission in the second cell, and may include but is not limited to one or more of the following: a configured grant resource; and a resource scheduled by a PDCCH scrambled by using a C-RNTI of the terminal side device.

For detailed content of the foregoing resource, refer to the descriptions in step 402. Details are not described herein again.

When there is an available uplink resource in the second cell, the terminal side device still does not send the first information by using the uplink resource in the second cell. In a possible implementation, when determining that a start moment of the available uplink resource in the second cell is earlier than a sending moment of payload data of a msg A in the two-step random access procedure, is earlier than a start moment of an uplink resource indicated by an RAR message in the four-step random access procedure, or is earlier than a sending moment of the uplink resource requested by using an SR, the terminal side device still does not use the uplink resource of the second cell.

Alternatively, before sending the first information in the second BWP of the first cell, the terminal side device may not determine whether there is an available uplink resource in the second cell. In other words, regardless of whether there is an available uplink resource in the second cell, the terminal side device sends the first information in the second BWP of the first cell.

In this embodiment of this application, when the terminal side device determines that the consistent uplink LBT failure occurs in a fourth BWP of a third cell, and the terminal side device has not generated a MAC CE including indication information used to indicate that the consistent uplink LBT failure occurs in the third cell, there is no clear solutions to how the terminal side device performs processing currently if the terminal side device determines to switch the BWP. Therefore, an embodiment of this application further provides a method to resolve the foregoing problem.

FIG. 7 is a schematic flowchart of a communication method according to an embodiment of this application.

Step 701: A terminal side device determines that consistent uplink LBT failure occurs in a fourth BWP of a third cell.

For how the terminal side device specifically determines that the consistent uplink LBT failure occurs, refer to the foregoing descriptions. Details are not described herein again.

Step 702: Before generating third information, the terminal side device performs a first operation if determining to switch to a fifth BWP of the third cell.

The third information is used to indicate that the terminal side device does not experience the consistent uplink LBT failure in the third cell.

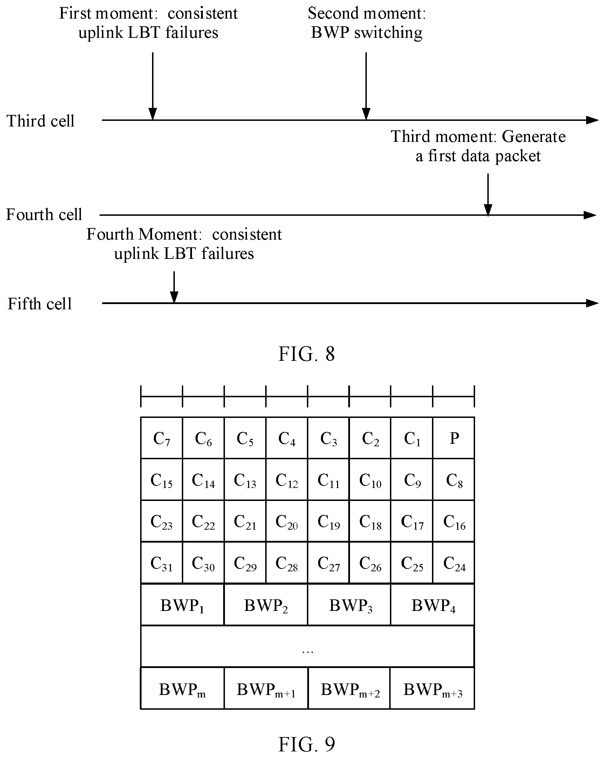

For example, with reference to FIG. 7, as shown in FIG. 8, the terminal side device determines, at a first moment, that the consistent uplink LBT failure occurs in the fourth BWP of the third cell. The terminal side device determines to switch to the fifth BWP of the third cell at a second moment. Because the consistent uplink LBT failure occurs in both the third cell and a fifth cell, the terminal side device may send, through a fourth cell, a data packet carrying the third information. Refer to FIG. 8. The terminal side device generates a first data packet at a third moment. The first data packet is a newly transmitted data packet, and may include the third information by using a logical channel prioritization (Logical Channel Prioritization, LCP) procedure.

It should be noted that, in FIG. 8, at a fourth moment, if the terminal side device experiences the consistent uplink LBT failure in the fifth cell, the terminal side device may alternatively report, to a network side device, the third information carried in the first data packet. The third information is used to indicate that the terminal side device experiences the consistent uplink LBT failure in the fifth cell. For example, when the third information is a MAC CE, a specific operation may be setting a value of a bit in a cell identifier field corresponding to the fifth cell in the third information to a first value, for example, setting to 1.

Optionally, the first data packet may be a MAC protocol data unit (protocol data unit, PDU). The third information may be the MAC CE. For a detailed structure of the MAC CE, refer to FIG. 5.

Optionally, a MAC CE used to indicate that the consistent uplink LBT failure occurs may also be referred to as an LBT failure MAC CE.

Optionally, if the third cell is a secondary cell, when receiving DCI from the network side device, the terminal side device switches to the fifth BWP indicated by the DCI. The DCI is used to indicate that the terminal side device switches to the fifth BWP.

Optionally, if the third cell is a primary cell or a primary secondary cell, when receiving the DCI from the network side device, the terminal side device may switch to the fifth BWP indicated by the DCI. Alternatively, the terminal side device may actively trigger BWP switching to switch to the fifth BWP. It should be noted that, when the terminal side device actively triggers BWP switching, a trigger condition for triggering BWP switching may be a trigger condition other than the consistent uplink LBT failure. For example, a possible trigger condition is sending different types of data to trigger BWP switching. Certainly, this is only an example. The trigger condition may further include another case, provided that BWP switching is not triggered by the consistent uplink LBT failure in the third cell.

With reference to the foregoing descriptions, in this embodiment of this application, the first operation may be any one of the following operations:

### 1. Cancel a consistent uplink LBT failure status of the third cell.

Optionally, the terminal side device may further send the first data packet including the third information.

When the third information is the MAC CE shown in FIG. 5, the MAC CE may include a plurality of cell identifier fields. For example, FIG. 5 includes 31 cell identifier fields: C1 to C31. When a value of a bit corresponding to one cell identifier field is a first value, it indicates that the terminal side device experiences the consistent uplink LBT failure in a cell corresponding to the cell identifier field. When a value of a bit corresponding to one cell identifier field is a second value, it indicates that the terminal side device does not experience the consistent uplink LBT failure in a cell corresponding to the cell identifier field. Specific values of the first value and the second value are not limited. For example, the first value is 1, and the second value is 0.

For example, with reference to the foregoing examples, when the third information is the MAC CE, a value of a bit in a cell identifier field corresponding to the third cell in the third information may be set to a second value, for example, set to 0.

2. When performing packet assembly on the first data packet, the terminal side device determines that if no consistent uplink LBT failure occurs in another serving cell other than the third cell, the terminal side device cancels generating the third information. In other words, the third information is not carried in the first data packet.

The network side device can accurately determine, according to the foregoing operations, whether the consistent uplink LBT failure occur in the third cell, to avoid unnecessary BWP switching caused by mistakenly considering that the consistent uplink LBT failure occurs in the third cell.

### 3. Maintain the consistent uplink LBT failure status of the third cell.

Optionally, the terminal side device no longer sends the third information, but may send a first data packet including fourth information.

The fourth information is used to indicate that the terminal side device experiences the consistent uplink LBT failure in the third cell.

For example, with reference to FIG. 5, when the fourth information is the MAC CE, a value of a bit in a cell identifier field corresponding to the third cell in the fourth information may be set to the first value, for example, set to 1.

### 4. Maintain the consistent uplink LBT failure status of the third cell.

Optionally, the terminal side device may further send the first data packet including the fourth information.

The fourth information is used to indicate that the terminal side device experiences the consistent uplink LBT failure in the third cell. The fourth information may further be used to indicate the fourth BWP.

For example, with reference to the foregoing possible implementation, the fourth information may further include at least one BWP identifier field, as shown in FIG. 9. The BWP identifier field is used to indicate an identifier of a BWP in which the consistent uplink LBT failure occurs. For example, if the first value is 1, the second value is 0. When a value of a bit corresponding to C1 is 1, a BWP 1 indicates an identifier of a BWP in which the consistent uplink LBT failure occurs in a cell corresponding to C1. If the value of the bit corresponding to C1 is 0, and a value of a bit corresponding to C2 is 1, the BWP 1 indicates an identifier of a BWP in which the consistent uplink LBT failure occurs in a cell corresponding to C2. Another case may be deduced by analogy. Details are not described again. The BWP 1 is an identifier of a BWP in which the consistent uplink LBT failure occurs in the first serving cell in which the consistent uplink LBT failure occurs. Currently, one serving cell supports a maximum of four dedicated BWPs. Therefore, the BWP identifier field may include at least two bits. A specific quantity of included bits is not limited. A quantity of dedicated BWPs is extended below, where the method is also applicable. Details are not described herein again.

With reference to FIG. 9, the value of the bit in the cell identifier field corresponding to the third cell in the fourth information may be set to the first value, for example, set to 1. In addition, the fourth information may further include the BWP identifier field. The BWP identifier field is used to carry an identifier of the fourth BWP.

The network side device can accurately determine, according to the foregoing operations, whether the consistent uplink LBT failure occurs in the third cell, and can further determine a BWP in which the consistent uplink LBT failure occurs.

Embodiments described in this specification may be independent solutions, or may be combined based on internal logic. All these solutions fall within the protection scope of this application.

It may be understood that in the foregoing method embodiments, the methods and operations implemented by the terminal side device may alternatively be implemented by a component (for example, a chip or a circuit) that can be used in the terminal side device.

In the foregoing embodiments provided in this application, the methods provided in embodiments of this application are separately described from a perspective of interaction between devices. To implement functions in the method provided in embodiments of this application, a terminal side device may include a hardware structure and/or a software module, to implement the functions in a form of a hardware structure, a software module, or a hardware structure and a software module. Whether a function in the foregoing functions is performed by using the hardware structure, the software module, or the combination of the hardware structure and the software module depends on particular applications and design constraints of the technical solutions.

In embodiments of this application, division into modules is an example, and is only logical function division. There may be another division manner during actual implementation. In addition, function modules in embodiments of this application may be integrated into one processor, or each of the modules may exist alone physically, or two or more modules are integrated into one module. The integrated module may be implemented in a form of hardware, or may be implemented in a form of a software functional module.

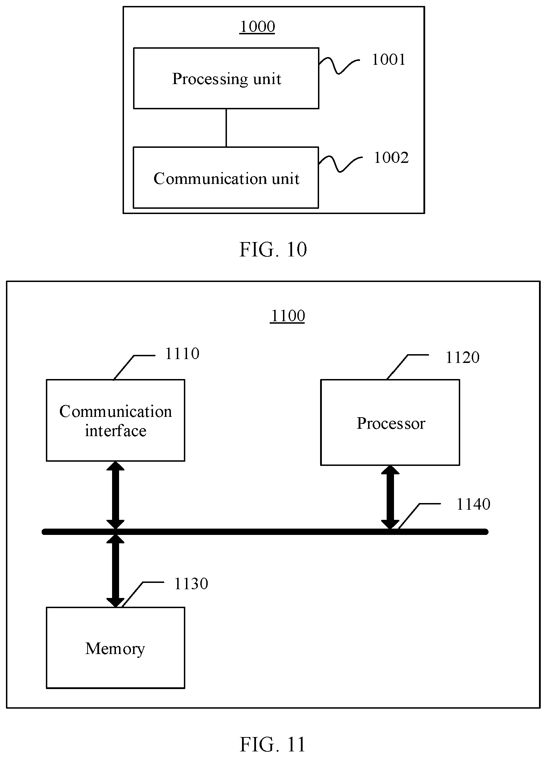

Same as the foregoing concept, as shown in FIG. 10, an embodiment of this application further provides an apparatus 1000, configured to implement a function of the terminal side device or the network side device in the foregoing method. For example, the apparatus may be a software module or a chip system. In this embodiment of this application, the chip system may include a chip, or may include a chip and another discrete device. The apparatus 1000 may include a processing unit 1001 and a communication unit 1002.

In this embodiment of this application, the communication unit may also be referred to as a transceiver unit, and may include a sending unit and/or a receiving unit, which are respectively configured to perform sending and receiving steps of the terminal side device or the network device in the foregoing method embodiments.

The following describes in detail communication apparatuses provided in embodiments of this application with reference to FIG. 10 and FIG. 11. It should be understood that descriptions of apparatus embodiments correspond to the descriptions of the method embodiments. Therefore, for content that is not described in detail, refer to the foregoing method embodiments. For brevity, details are not described herein again.

For example, when the apparatus 1000 implements a function of the terminal side device in the procedure shown in FIG. 4,
the processing unit 1001 is configured to determine that consistent uplink listen before talk LBT failure occurs in a first bandwidth part BWP of a first cell, and
the communication unit 1002 is configured to send first information to the network side device by using an uplink resource in a second cell. The first information is used to indicate that the terminal side device experiences the consistent uplink LBT failure in the first cell. The second cell is a cell in which no consistent uplink LBT failure occurs.

In a possible implementation, the processing unit 1001 is further configured to:
start a first timer, where timing duration of the first timer is first duration; and
when the first timer expires, switch to a second BWP of the first cell if the communication unit does not receive, from the network side device, second information in response to the first information, where the second BWP includes a resource for performing a random access procedure, and the second information is downlink control information DCI used to schedule the terminal side device to perform BWP switching; and perform the random access procedure in the second BWP by using the resource for performing the random access procedure.

In a possible implementation, the communication unit is specifically configured to:
send, by the terminal side device, the first information by using the uplink resource in the second cell when determining that a quantity of times of sending the first information is less than N, where N is an integer greater than 1.

In a possible implementation, the processing unit 1001 is further configured to:
switch to a second BWP of the first cell when determining that the quantity of times of sending the first information is not less than N, where N is an integer greater than 1, and the second BWP includes a resource for performing a random access procedure; and
perform the random access procedure in the second BWP by using the resource for performing the random access procedure.

In a possible implementation, when the random access procedure is a two-step random access procedure, the communication unit is configured to send the first information by using a physical uplink shared channel PUSCH resource that is determined based on a preamble and a physical random access channel PRACH occasion corresponding to the preamble in the two-step random access procedure.

Alternatively, when the random access procedure is a four-step random access procedure, the communication unit is configured to send the first information by using an uplink resource allocated by using a random access response RAR message in the four-step random access procedure.

In a possible implementation, the communication unit 1002 is specifically configured to:
switch to a second BWP of the first cell, where the second BWP includes a resource for performing a random access procedure; and
initiate a two-step random access procedure in the second BWP by using the resource for performing the random access procedure, and the terminal side device sends the first information by using the uplink resource in the second cell when a start moment of the uplink resource in the second cell in time domain is earlier than a start moment of a physical uplink shared channel PUSCH resource that is determined based on a preamble and a physical random access channel PRACH occasion corresponding to the preamble in the two-step random access procedure; or
initiate a four-step random access procedure in the second BWP by using the resource for performing the random access procedure, and the terminal side device sends the first information by using the uplink resource in the second cell when a start moment of the uplink resource in the second cell in time domain is earlier than a start moment of an uplink resource allocated by using a random access response RAR message in the four-step random access procedure.

In a possible implementation, the first cell is a primary cell or a primary secondary cell, and the second cell is a secondary cell.

For example, when the apparatus 1000 implements a function of the terminal side device in the procedure shown in FIG. 6,
the processing unit 1001 is configured to determine that consistent uplink listen before talk LBT failure occurs in a first bandwidth part BWP of a first cell, where the first cell is a primary cell or a primary secondary cell, a second cell is a secondary cell, and the second cell is a cell in which no consistent uplink LBT failure occurs and includes an available uplink resource; and
the communication unit 1002 is configured to: switch to a second BWP of the first cell, and send first information in the second BWP of the first cell in the first cell and the second cell, where the first information is used to indicate that the terminal side device experiences the consistent uplink LBT failure in the first cell.

In a first possible implementation, the second BWP includes a resource for performing a random access procedure.

The communication unit 1002 is specifically configured to:
perform the random access procedure in the second BWP by using the resource for performing the random access procedure; and
when the random access procedure is a two-step random access procedure, send the first information by using a physical uplink shared channel PUSCH resource corresponding to a preamble in the two-step random access procedure; or
when the random access procedure is a four-step random access procedure, send the first information by using an uplink resource allocated by using a random access response RAR message in the four-step random access procedure.

For example, when the apparatus 1000 implements a function of the terminal side device in the procedure shown in FIG. 7,
the processing unit 1001 is configured to determine, by using the communication unit 1002, that consistent uplink listen before talk LBT failure occurs in a fourth bandwidth part BWP of a third cell.

The processing unit 1001 is configured to: before generating third information, cancel a consistent uplink LBT failure status of the third cell if the processing unit determines to switch to a fifth BWP of the third cell, where the third information is used to indicate that the terminal side device does not experience the consistent uplink LBT failure in the third cell.

In a possible implementation, the processing unit 1001 is specifically configured to:
receive downlink control information DCI from the network side device, where the DCI is used to indicate that the terminal side device switches to the fifth BWP.

FIG. 11 shows an apparatus 1100 according to an embodiment of this application. The apparatus shown in FIG. 11 may be an implementation of a hardware circuit of the apparatus shown in FIG. 10. The communication apparatus may be configured to perform a function of the terminal side device in the foregoing method embodiments. For ease of description, FIG. 11 shows only main components of the communication apparatus.

The apparatus 1100 shown in FIG. 11 includes at least one processor 1120.

The apparatus 1100 may further include at least one memory 1130, configured to store program instructions and/or data. The memory 1130 is coupled to the processor 1120. The coupling in this embodiment of this application is indirect coupling or a communication connection between apparatuses, units, or modules for information exchange between the apparatuses, the units, or the modules, and may be in electrical, mechanical, or other forms. The processor 1120 may operate with the memory 1130 collaboratively. The processor 1120 may execute the program instructions stored in the memory 1130. At least one of the at least one memory may be included in the processor.

It should be noted that, the processor in this embodiment of this application may be an integrated circuit chip, and has a signal processing capability. In an implementation process, the steps in the foregoing method embodiments may be completed by using a hardware integrated logic circuit in the processor or instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, or a discrete hardware component.

It may be understood that, in this embodiment of this application, the memory may be a volatile memory or a nonvolatile memory, or may include both a volatile memory and a nonvolatile memory. It should be noted that the memory in the system and method described in this specification includes but is not limited to these memories and any memory of another appropriate type.

The apparatus 1100 may further include a communication interface 1110, configured to communicate with another device by using a transmission medium, so that an apparatus in the apparatus 1100 can communicate with another device. In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver integrated with a transceiver function or an interface circuit.

The apparatus 1100 may further include a communication line 1140. The communication interface 1110, the processor 1120, and the memory 1130 may be connected to each other through the communication line 1140. The communication line 1140 may be a peripheral component interconnect (peripheral component interconnect, PCI for short) bus, an extended industry standard architecture (extended industry standard architecture, EISA for short) bus, or the like. The communication line 1140 may be classified into an address bus, a data bus, a control bus, and the like. For ease of representation, only one bold line is used to represent the bus in FIG. 11, but this does not mean that there is only one bus or only one type of bus.

For example, when the apparatus 1100 implements a function of the terminal side device in the procedure shown in FIG. 4,
the processor 1120 is configured to determine that consistent uplink listen before talk LBT failure occurs in a first bandwidth part BWP of a first cell, and
the communication interface 1110 is configured to send first information to a network side device by using an uplink resource in a second cell, where the first information is used to indicate that the terminal side device experiences the consistent uplink LBT failure in the first cell, and the second cell is a cell in which no consistent uplink LBT failure occurs.

In a possible implementation, the processor 1120 is further configured to:
start a first timer, where timing duration of the first timer is first duration;
when the first timer expires, switch to a second BWP of the first cell if the communication unit does not receive, from the network side device, second information in response to the first information, where the second BWP includes a resource for performing a random access procedure, and the second information is downlink control information DCI used to schedule the terminal side device to perform BWP switching; and
perform the random access procedure in the second BWP by using the resource for performing the random access procedure.

In a possible implementation, the communication unit is specifically configured to:
send, by the terminal side device, the first information by using the uplink resource in the second cell when determining that a quantity of times of sending the first information is less than N, where N is an integer greater than 1.

In a possible implementation, the processor 1120 is further configured to:
switch to a second BWP of the first cell when determining that the quantity of times of sending the first information is not less than N, where N is an integer greater than 1, and the second BWP includes a resource for performing a random access procedure; and
perform the random access procedure in the second BWP by using the resource for performing the random access procedure.

In a possible implementation, when the random access procedure is a two-step random access procedure, the communication unit is configured to send the first information by using a physical uplink shared channel PUSCH resource that is determined based on a preamble and a physical random access channel PRACH occasion corresponding to the preamble in the two-step random access procedure.

Alternatively, when the random access procedure is a four-step random access procedure, the communication unit is configured to send the first information by using an uplink resource allocated by using a random access response RAR message in the four-step random access procedure.

In a possible implementation, the communication interface 1110 is specifically configured to:
switch to a second BWP of the first cell, where the second BWP includes a resource for performing a random access procedure; and
initiate a two-step random access procedure in the second BWP by using the resource for performing the random access procedure, and the terminal side device sends the first information by using the uplink resource in the second cell when a start moment of the uplink resource in the second cell in time domain is earlier than a start moment of a physical uplink shared channel PUSCH resource that is determined based on a preamble and a physical random access channel PRACH occasion corresponding to the preamble in the two-step random access procedure; or
initiate a four-step random access procedure in the second BWP by using the resource for performing the random access procedure, and the terminal side device sends the first information by using the uplink resource in the second cell when a start moment of the uplink resource in the second cell in time domain is earlier than a start moment of an uplink resource allocated by using a random access response RAR message in the four-step random access procedure.

In a possible implementation, the first cell is a primary cell or a primary secondary cell, and the second cell is a secondary cell.

For example, when the apparatus 1100 implements a function of the terminal side device in the procedure shown in FIG. 6,
the processor 1120 is configured to determine that consistent uplink listen before talk LBT failure occurs in a first bandwidth part BWP of a first cell, where the first cell is a primary cell or a primary secondary cell, a second cell is a secondary cell, and the second cell is a cell in which no consistent uplink LBT failure occurs and includes an available uplink resource; and
the communication interface 1110 is configured to: switch to a second BWP of the first cell, and send first information in the second BWP of the first cell in the first cell and the second cell, where the first information is used to indicate that the terminal side device experiences the consistent uplink LBT failure in the first cell.

In a first possible implementation, the second BWP includes a resource for performing a random access procedure.

The communication interface 1110 is specifically configured to:
perform the random access procedure in the second BWP by using the resource for performing the random access procedure; and
when the random access procedure is a two-step random access procedure, send the first information by using a physical uplink shared channel PUSCH resource corresponding to a preamble in the two-step random access procedure; or
when the random access procedure is a four-step random access procedure, send the first information by using an uplink resource allocated by using a random access response RAR message in the four-step random access procedure.

For example, when the apparatus 1100 implements a function of the terminal side device in the procedure shown in FIG. 7,
the processor 1120 is configured to determine, through the communication interface 1110, that consistent uplink listen before talk LBT failure occurs in a fourth bandwidth part BWP of a third cell.

The processor 1120 is configured to: before generating third information, cancel a consistent uplink LBT failure status of the third cell if the processing unit determines to switch to a fifth BWP of the third cell, where the third information is used to indicate that the terminal side device does not experience the consistent uplink LBT failure in the third cell.

In a possible implementation, the processor 1120 is specifically configured to:
receive downlink control information DCI from a network side device, where the DCI is used to indicate that the terminal side device switches to the fifth BWP.

A person skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, an optical memory, and the like) that include compute-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application within the scope of the claims.

## Claims

1. A communication method, comprising:
determining (701), by a terminal side device (104), that consistent uplink listen before talk, LBT, failure occurs in a bandwidth part, BWP, of a cell; and
before generating first information, canceling (702), by the terminal side device (104), a consistent uplink LBT failure status of the cell if the terminal side device (104) determines to switch to another BWP of the cell, wherein the first information is used to indicate that the terminal side device (104) does not experience the consistent uplink LBT failure in the cell.

2. The method according to claim 1, wherein the determining to switch to the another BWP of the cell comprises:
receiving, by the terminal side device (104), downlink control information, DCI, from a network side device (102, 106), wherein the DCI indicates that the terminal side device (104) switches to the another BWP.

3. The method according to claim 1 or 2, wherein the method further comprises:
generating, by the terminal side device (104) after the terminal side device (104) determines to switch to the another BWP of the cell, a first data packet being a data packet to be transmitted and comprising the first information by using a logical channel prioritization, LCP, procedure.

4. The method according to claim 3, wherein the first data packet is a medium access control, MAC, protocol data unit, PDU, and the first information is a MAC control element, CE, including a plurality of cell identifier fields and the value of a bit corresponding to a respective cell identifier field indicates whether the terminal experiences or not the consistent uplink LBT failure in a cell corresponding to the cell identifier field.

5. The method according to any one of claims 1 to 4, wherein the cell is a primary cell, a primary secondary cell, or a secondary cell, wherein
if the cell is the secondary cell, when receiving the DCI from the network side device (102, 106), the terminal side device (104) switches to the another BWP indicated by the DCI, the DCI is used to indicate that the terminal side device (104) switches to the another BWP,
if the cell is the primary cell or the primary secondary cell, the terminal side device (104) actively triggers BWP switching to switch to the another BWP, or when receiving the DCI from the network side device (102, 106), the terminal side device (104) switches to the another BWP indicated by the DCI.

6. The method according to any one of claims 1 to 5, wherein the determining, by the terminal side device (104), that the consistent uplink LBT failure occurs in the BWP of the cell comprises:
performing, by the terminal side device (104), an uplink LBT in the BWP of the cell;
if the terminal side device (104) determines that each time an uplink LBT failure occurs in the BWP, performing, by the terminal side device (104), the following operations:
increasing a count value of an LBT failure counter by 1, where an initial value of the counter is 0;
starting or restarting a timer;
determining that the consistent uplink LBT failure occurs in the BWP of the cell when the timer does not expire and the count value of the LBT failure counter reaches a threshold.

7. The method according to claim 6, wherein the method further comprises:
resetting, by the terminal side device (104) when the timer expires, the count value of the LBT failure counter to 0.

8. A communications apparatus (1000, 1100), which is configured to perform the method according to any one of claims 1 to 7.

9. A computer-readable storage medium, comprising computer-readable instructions which, when executed by a communication apparatus (1000, 1100), cause the communication apparatus (1000, 1100) to perform the method according to any one of claims 1 to 7.

10. A computer program product, comprising computer-readable instructions which, when executed by a communication apparatus (1000, 1100), cause the communication apparatus (1000, 1100) to perform the method according to any one of claims 1 to 7.

## Patentansprüche

1. Kommunikationsverfahren, umfassend:
Feststellen (701) durch ein terminalseitiges Gerät (104), dass in einem Bandbreitenteil (BWP) einer Zelle ein konsistenter Uplink-Listen-Before-Talk-Fehler (LBT) auftritt; und
vor dem Erzeugen erster Informationen, Aufheben (702) des konsistenten Uplink-LBT-Fehlerstatus der Zelle durch das terminalseitige Gerät (104), wenn das terminalseitige Gerät (104) entscheidet, zu einem anderen BWP der Zelle zu wechseln, wobei die ersten Informationen verwendet werden, um anzuzeigen, dass das terminalseitige Gerät (104) den konsistenten Uplink-LBT-Fehler in der Zelle nicht erfährt.

2. Verfahren nach Anspruch 1, wobei das Bestimmen, zu einem anderen BWP der Zelle zu wechseln, Folgendes umfasst:
Empfangen von Downlink-Steuerinformationen (DCI) durch das terminalseitige Gerät (104) von einem netzwerkseitigen Gerät (102, 106), wobei die DCI anzeigt, dass das terminalseitige Gerät (104) zu dem anderen BWP wechselt.

3. Verfahren nach Anspruch 1 oder 2, wobei das Verfahren ferner Folgendes umfasst:
Erzeugen eines ersten Datenpakets durch das terminalseitige Gerät (104), nachdem das terminalseitige Gerät (104) bestimmt hat, zu einem anderen BWP der Zelle zu wechseln, wobei das erste Datenpaket ein zu übertragendes Datenpaket ist und die ersten Informationen umfasst, unter Verwendung eines Verfahrens zur logischen Kanalpriorisierung (LCP).

4. Verfahren nach Anspruch 3, wobei das erste Datenpaket eine Medium-Access-Control (MAC) -Protokolldateneinheit (PDU) ist und die erste Information ein MAC-Steuerelement (CE) ist, das mehrere Zellenkennungsfelder umfasst, wobei der Wert eines Bits, das jeweils einem Zellenkennungsfeld zugeordnet ist, angibt, ob das Endgerät in der entsprechenden Zelle einen konsistenten Uplink-LBT-Fehler erfährt oder nicht.

5. Verfahren nach einem der Ansprüche 1 bis 4, wobei die Zelle eine Primärzelle, eine Primärsekundärzelle oder eine Sekundärzelle ist, wobei
wenn es sich bei der Zelle um eine Sekundärzelle handelt, wechselt das terminalseitige Gerät (104) beim Empfang der DCI vom netzwerkseitigen Gerät (102, 106) zu dem in der DCI angegebenen anderen BWP, wobei die DCI verwendet wird, um anzuzeigen, dass das terminalseitige Gerät (104) zu dem anderen BWP wechselt,
wenn es sich bei der Zelle um eine Primärzelle oder eine Primärsekundärzelle handelt, löst das terminalseitige Gerät (104) aktiv eine BWP-Umschaltung aus, um zu dem anderen BWP zu wechseln, oder wenn das terminalseitige Gerät (104) die DCI vom netzwerkseitigen Gerät (102, 106) empfängt, wechselt das terminalseitige Gerät (104) zu dem in der DCI angegebenen anderen BWP.

6. Verfahren nach einem der Ansprüche 1 bis 5, wobei das Feststellen, durch das terminalseitige Gerät (104), dass der konsistente Uplink-LBT-Fehler im BWP der Zelle auftritt, Folgendes umfasst:
Durchführen eines Uplink-Listen-Before-Talk (LBT) im Bandbreitenteil (BWP) der Zelle durch das terminalseitige Gerät (104);
wenn das terminalseitige Gerät (104) bei jedem Auftreten eines Uplink-LBT-Fehlers im BWP feststellt, dass ein Fehler vorliegt, Ausführen der folgenden Vorgänge durch das terminalseitige Gerät (104):
Erhöhen eines Zählwerts eines LBT-Fehlerzählers um 1, wobei ein Anfangswert des Zählers 0 ist;
Starten oder Neustarten eines Timers;
Bestimmen, dass der konsistente Uplink-LBT-Fehler im BWP der Zelle auftritt, wenn der Timer nicht abläuft und der Zählwert des LBT-Fehlerzählers einen Schwellenwert erreicht.

7. Verfahren nach Anspruch 6, wobei das Verfahren ferner Folgendes umfasst:
Zurücksetzen des Zählwerts des LBT-Fehlerzählers auf 0 durch das terminalseitige Gerät (104), wenn der Timer abläuft.

8. Kommunikationsvorrichtung (1000, 1100), die dazu konfiguriert ist, das Verfahren nach einem der Ansprüche 1 bis 7 durchzuführen.

9. Computerlesbares Speichermedium, umfassend computerlesbare Anweisungen, die, wenn sie von einer Kommunikationsvorrichtung (1000, 1100) ausgeführt werden, bewirken, dass die Kommunikationsvorrichtung (1000, 1100) das Verfahren nach einem der Ansprüche 1 bis 7 durchführt.

10. Computerprogrammprodukt, umfassend computerlesbare Anweisungen, die, wenn sie von einer Kommunikationsvorrichtung (1000, 1100) ausgeführt werden, die Kommunikationsvorrichtung (1000, 1100) dazu veranlassen, das Verfahren nach einem der Ansprüche 1 bis 7 durchzuführen.

## Revendications

1. Procédé de communication comprenant :
la détermination (701), par un dispositif côté terminal (104), du fait qu'une défaillance de l'écoute avant parole (LBT) de liaison montante cohérente se produit dans une partie de bande passante (BWP) d'une cellule ; et
avant la génération des premières informations, l'annulation (702), par le dispositif côté terminal (104), d'un état de défaillance LBT de liaison montante cohérente de la cellule si le dispositif côté terminal (104) détermine de commuter vers une autre BWP de la cellule, dans lequel les premières informations sont utilisées pour indiquer que le dispositif côté terminal (104) ne subit pas la défaillance LBT de liaison montante cohérente dans la cellule.

2. Procédé selon la revendication 1, dans lequel la détermination de commuter vers l'autre BWP de la cellule comprend :
la réception, par le dispositif côté terminal (104), des informations de commande de liaison descendante, DCI, en provenance d'un dispositif côté réseau (102, 106), dans lequel les DCI indiquent que le dispositif côté terminal (104) commute vers l'autre BWP.

3. Procédé selon la revendication 1 ou 2, dans lequel le procédé comprend également :
la génération, par le dispositif côté terminal (104) après que le dispositif côté terminal (104) a déterminé de commuter vers l'autre BWP de la cellule, d'un premier paquet de données étant un paquet de données à transmettre et comprenant les premières informations à l'aide d'une procédure de priorisation de canal logique, LCP.

4. Procédé selon la revendication 3, dans lequel le premier paquet de données est une unité de données de protocole (PDU) de commande d'accès au support (MAC) et les premières informations sont un élément de commande (CE) MAC comportant une pluralité de champs d'identifiant de cellule et la valeur d'un bit correspondant à un champ d'identifiant de cellule respectif indique si le terminal subit ou non la défaillance LBT de liaison montante cohérente dans une cellule correspondant au champ d'identifiant de cellule.

5. Procédé selon l'une quelconque des revendications 1 à **4,** dans lequel la cellule est une cellule primaire, une cellule secondaire primaire ou une cellule secondaire, dans lequel si la cellule est la cellule secondaire, lors de la réception des DCI du dispositif côté réseau (102, 106), le dispositif côté terminal (104) commute vers l'autre BWP indiquée par les DCI, les DCI sont utilisées pour indiquer que le dispositif côté terminal (104) commute vers l'autre BWP,
si la cellule est la cellule primaire ou la cellule secondaire primaire, le dispositif côté terminal (104) déclenche activement la commutation BWP pour commuter vers l'autre BWP, ou lors de la réception des DCI à partir du dispositif côté réseau (102, 106), le dispositif côté terminal (104) commute vers l'autre BWP indiquée par les DCI.

6. Procédé selon l'une quelconque des revendications 1 à 5, dans lequel la détermination, par le dispositif côté terminal (104), du fait que la défaillance LBT de liaison montante cohérente se produit dans la BWP de la cellule comprend :
la réalisation, par le dispositif côté terminal (104), d'une LBT de liaison montante dans la BWP de la cellule ;
si le dispositif côté terminal (104) détermine le fait qu'à chaque fois qu'une défaillance LBT de liaison montante se produit dans la BWP, la réalisation, par le dispositif côté terminal (104), des opérations suivantes :
l'augmentation de la valeur de comptage d'un compteur de défaillance LBT de 1, où la valeur initiale du compteur est 0 ;
le démarrage ou le redémarrage d'un temporisateur ;
la détermination du fait que la défaillance LBT de liaison montante cohérente se produit dans la BWP de la cellule lorsque le temporisateur n'expire pas et que la valeur de comptage du compteur de défaillance LBT atteint un seuil.

7. Procédé selon la revendication 6, dans lequel le procédé comprend également :
la réinitialisation, par le dispositif côté terminal (104) lorsque le temporisateur expire, de la valeur de comptage du compteur de défaillance LBT à 0.

8. Appareil de communication (1000, 1100), qui est configuré pour réaliser le procédé selon l'une quelconque des revendications 1 à 7.

9. Support de stockage lisible par ordinateur comprenant des instructions lisibles par ordinateur qui, lorsqu'elles sont exécutées par un appareil de communication (1000, 1100), amènent l'appareil de communication (1000, 1100) à réaliser le procédé selon l'une quelconque des revendications 1 à 7.

10. Produit de programme informatique, comprenant des instructions lisibles par ordinateur qui, lorsqu'elles sont exécutées par un appareil de communication (1000, 1100), amènent l'appareil de communication (1000, 1100) à réaliser le procédé selon l'une quelconque des revendications 1 à 7.
